# EUROPEAN PATENT APPLICATION

(11) **EP 3 896 214 A1**
(43) Date of publication of application: **20.10.2021**
(21) Application number: 21164963.7
(22) Date of filing: 25.03.2021
(51) Int. Cl.: D06F 58/20, D06F 58/38, D06F 103/08, D06F 103/32, D06F 105/26

(54) **HOME APPLIANCE DRYER COMPRISING A HEAT PUMP CIRCUIT HAVING A COMPRESSOR, AND METHOD OF OPERATING SUCH HOME APPLIANCE DRYER**

(30) Priority: 17.04.2020 EP 20382315
(71) Applicant: BSH Hausgeräte GmbH, 81739 München (DE)
(72) Inventor: Capablo Sese, Joaquin Jesus, 50003 Zaragoza (ES); Ruiz Bermejo, Jose Antonio, 26540 Alfaro (La Rioja) (ES); Vereda Ortiz, Ciro Sebastián, 31014 Pamplona (ES)

(57) **Abstract**

The invention relates to a home appliance dryer 1 comprising a drying chamber 3 for receiving items 4 to be dried and a process air circuit for passing an air flow of process air through the drying chamber 3, the process air circuit including an air channel 5, a blower 6 for driving the air flow, a first heat exchanger 7 for heating the air flow prior to entering the drying chamber 3, a second heat exchanger 8 for cooling the air flow after leaving the drying chamber 3, and comprising a heat pump circuit including a refrigerant channel 9 for circulating a refrigerant flow of a refrigerant, the first heat exchanger 7 as a heat source, the second heat exchanger 8 as a heat sink, a first expansion device 10 for expanding the refrigerant flow, and a compressor 12 for driving and compressing the refrigerant flow, the refrigerant flow circulating sequentially through the compressor 12, the first heat exchanger 7, the first expansion device 20, and the second heat exchanger 8, characterized in that the heat pump circuit includes a recirculator for recirculating a part of the refrigerant flow from an outlet 13 to an inlet 14 of the compressor 12, the recirculator including a first recirculation channel 15 and a second expansion device 16 located in the first recirculation channel 15. The invention also relates to a method of operating such home appliance dryer 1.

## Description

The invention relates to a home appliance dryer comprising a drying chamber for receiving items to be dried and a process air circuit for passing an air flow of process air through the drying chamber, the process air circuit including an air channel, a blower for driving the air flow, a first heat exchanger for heating the air flow prior to entering the drying chamber, a second heat exchanger for cooling the air flow after leaving the drying chamber, and comprising a heat pump circuit including a refrigerant channel for circulating a refrigerant flow of a refrigerant, the first heat exchanger as a heat source, the second heat exchanger as a heat sink, a first expansion device for expanding the refrigerant flow, and a compressor for driving and compressing the refrigerant flow, the refrigerant flow circulating sequentially through the compressor, the first heat exchanger, the first expansion device, and the second heat exchanger.

The invention also relates to a method of operating such home appliance dryer.

Documents EP 3 255 202 B1 and EP 3 379 992 B1 disclose embodiments of a home appliance dryer of the generic type as defined above wherein the home appliance dryer is a laundry dryer, as well as methods of operating such home appliance dryer.

An article "Hot Gas Bypass (HGBP) and the Pressure Enthalpy Diagram" by Mark Stetz and available in the Internet at http://www.fundamentalrefrigeration.com/tips--stuff/hot-gas-bypass-hgbp-and-the-pressure-enthalpy-diagram by February 12, 2020, discloses applying a hot gas bypass for a compressor in a climate control heat pump circuit for improving adaptation of the heat pump circuit to low load conditions. Under low load conditions the evaporator of such heat pump circuit may get frosted or frozen by undesired precipitation of humidity, or fail to completely evaporate liquid refrigerant circulating through, thereby admitting liquid refrigerant reaching the compressor and causing slugging which might incur damage to the compressor. Accordingly hot compressed gaseous refrigerant is bypassed to the inlet of the evaporator or to the inlet of the compressor, thereby raising the local temperature and preventing liquid refrigerant from entering the compressor.

It is desired to further develop a home appliance dryer of the generic type defined above towards providing increased flexibility in setting operational modes of the heat pump circuit. It is also desired to provide a method of operation of such home appliance dryer which exploits such increased flexibility.

Accordingly it is a problem of the invention to be disclosed subsequently to provide a home appliance dryer offering increased flexibility setting operational modes of the heat pump circuit, particularly in variably setting a working point of the heat pump circuit. It is also desired to provide a method for operating such home appliance dryer which exploits such increased flexibility.

Solutions to these problems are accomplished, according to the invention, by providing a home appliance dryer and a method for operating a home appliance dryer as defined in the respective independent claim. Preferred embodiments of the home appliance dryer and the method are defined in respective dependent claims, with preferred embodiments of the home appliance dryer corresponding to preferred embodiments of the method, and vice versa, even if not expressly specified elsewhere herein.

In accordance with the invention there is provided a home appliance dryer comprising a drying chamber for receiving items to be dried and a process air circuit for passing an air flow of process air through the drying chamber, the process air circuit including an air channel, a blower for driving the air flow, a first heat exchanger for heating the air flow prior to entering the drying chamber, a second heat exchanger for cooling the air flow after leaving the drying chamber, and comprising a heat pump circuit including a refrigerant channel for circulating a refrigerant flow of a refrigerant, the first heat exchanger as a heat source, the second heat exchanger as a heat sink, a first expansion device for expanding the refrigerant flow, and a compressor for driving and compressing the refrigerant flow, the refrigerant flow circulating sequentially through the compressor, the first heat exchanger, the first expansion device, and the second heat exchanger. In this home appliance dryer the heat pump circuit includes a recirculator for recirculating a part of the refrigerant flow from an outlet to an inlet of the compressor, the recirculator including a first recirculation channel and a second expansion device located in the first recirculation channel.

In accordance with the invention there is also provided a method of operating such home appliance dryer, wherein the compressor is operated for providing a predetermined high pressure at the outlet, and wherein the second expansion device is operated in dependence from an operational state of the home appliance dryer, to reduce the high pressure of the refrigerant to a predetermined low pressure.

The values of pressure in the system are predetermined by commonly known design principles and dependent upon a multiplicity of influential facts including sizes and types of heat exchangers used as heat sink and heat source, type and charge of the refrigerant, geometry of the expansion device, air flow in the process air channel including possible leakage, nominal ambient temperature, and duration of drying process.

Accordingly the invention provides a home appliance dryer wherein the recirculator is a bypass wherein hot gas from the outlet of the compressor may partly be recirculated to the inlet of the compressor for varying an operational state of the home appliance dryer, preferredly in adaptation to operational conditions imposed upon the home appliance dryer. Such operational conditions may be a temperature of the ambient of the home appliance dryer or user-defined desires such as a need for particularly quick drying of items.

In the home appliance dryer's heat pump circuit the refrigerant is circulated and thereby cyclically compressed and expanded as well as cooled and heated, on purpose of absorbing heat in the second heat exchanger by evaporating the refrigerant at low pressure, and releasing heat in the first heat exchanger by condensing the refrigerant at high pressure. Accordingly the first heat exchanger is commonly designated as a condenser, and the second heat exchanger is commonly designated as an evaporator.

Advantages of the invention include improvement of performance by regulating the working point of the heat pump circuit according to pertinent operational conditions or various operational parameters such as some temperature or pressure occurring in the heat pump circuit under operation. In addition regulating bypassing of refrigerant may enable faster drying of items to be dried by increasing both the heating capacity of the heat source and the cooling capacity of the heat sink in the heat pump circuit. Further a simple solution for varying the working point of a heat pump circuit in a home appliance dryer is provided which applies simple, cheap and quickly assembled means as an alternative to a compressor which is itself variable in operation, such as a variable-speed compressor. Even further, the compressor in the heat pump circuit may be heated up faster by operating with increased bypassing of refrigerant at least during a start-up period of the home appliance dryer, to ascertain smooth and safe operation without slugging even at low temperatures.

The home appliance dryer of the invention may be embodied as a laundry dryer for pieces of laundry, a washer-dryer which combines the function of washing laundry with the function of drying. Another embodiment is a dishwasher that performs drying of tableware by applying a heat pump circuit.

In accordance with a preferred embodiment of the invention the home appliance dryer comprises a control device for controlling operation of the home appliance dryer, wherein the second expansion device is a variable valve operably connected to the control device. Such operation may be of a switching type whereby the valve is switched between an open position for recirculating a part of the refrigerant and a closed position which cuts off any recirculation. Alternatively such operation may allow varying the amount of refrigerant which is recirculated, either stepwise or continuously.

In accordance with another preferred embodiment of the invention the home appliance dryer comprises an operational sensor for sensing an operational state of the home appliance dryer during operation, wherein the operational sensor is operably connected to the control device for providing a sensor signal relating to the operational state to the control device, and the control device is configured to operate the second expansion device in dependence of the sensor signal. Thereby the recirculation of refrigerant may be controlled automatically, by adapting the recirculation to operational states of the home appliance dryer as sensed by the operational sensor.

In accordance with a further preferred embodiment of the invention the operational sensor is a humidity sensor and the operational state is a humidity of the items. Thereby the working point of the heat pump circuit may be adapted to the humidity of the items to be dried.

In accordance with an additional preferred embodiment of the invention the operational sensor is a temperature sensor, and the operational state is an ambient temperature of the home appliance dryer. Thereby the working point of the heat pump circuit may be adapted to the ambient temperature of the dryer. In particular recirculation of refrigerant may be applied in order to ascertain that no liquid refrigerant reaches the compressor, thereby avoiding slugging in the compressor.

In accordance with yet another preferred embodiment of the invention the refrigerant used in the home appliance dryer is propane, which is also known by the designation R290 in the field of heat pump technology.

In accordance with yet a further preferred embodiment of the invention the recirculator is connected to the inlet through a first ejector, wherein refrigerant from the recirculator enters through a first driving inlet, refrigerant from the refrigerant channel enters through a first suction inlet, and refrigerant exiting at a first outlet flows to the compressor. In such embodiment use is made of energy contained in the refrigerant being recirculated, by applying it to actively propel refrigerant exiting the second heat exchanger towards the compressor. As a general feature an ejector includes the function of expanding a fluid that is entered through its driving inlet, converting pressure to velocity and forming a jet of fluid which entrains and propels fluid entering through the suction inlet. According to the invention the recirculator's second expansion device may be integrated into the first ejector, by selecting an ejector with an expansion function that is appropriate for the purpose. This simplifies the recirculator, and may allow applying a switch valve with no substantial expansion function (that is, restriction of the flow of refrigerant) upon being fully open in combination with the first ejector.

In accordance with yet an additional preferred embodiment of the invention the recirculator is configured for increasing a temperature at the inlet for the event that the home appliance dryer is operated at an ambient temperature substantially less than a normal room temperature. Thereby the invention is applied for preventing the compressor from slugging by liquid refrigerant entering at low ambient temperature, by providing additional heating to the refrigerant prior to entering the compressor.

In accordance with still another preferred embodiment of the invention the recirculator is configured for increasing at least one of a heating power of the first heat exchanger and a cooling power of the second heat exchanger. Thereby additional energy applied for driving the compressor with its load increased by recirculating part of the refrigerant is applied to increase the power output by the heat pump circuit, which provides options for accelerating a drying process in the home appliance dryer, even at the cost of increased power input to the compressor. Accordingly an accelerated drying mode may be offered for a home appliance dryer in addition to a normal mode of drying and designed without recirculating refrigerant, increasing flexibility of application of the home appliance dryer.

In accordance with still a further preferred embodiment of the invention the first recirculation channel bridges the compressor from its outlet to its inlet. Thereby a particularly simple layout is applied in implementing the invention.

In accordance with still an additional preferred embodiment of the invention the first recirculation channel branches into a second recirculation channel including a third expansion device and a third recirculation channel including a fourth expansion device downstream of the second expansion device, the second recirculation channel connecting to the inlet and the third recirculation channel connecting to the refrigerant channel downstream of the first expansion device and upstream of the second heat exchanger. Thereby the recirculated refrigerant is routed through the second heat exchanger partly or completely, thereby applying its energy to assisting in evaporating the refrigerant in the second heat exchanger.

In accordance with again another preferred embodiment of the invention the third recirculation channel is connected to the refrigerant channel through a second ejector, wherein refrigerant from the third recirculation channel enters through a second driving inlet, refrigerant from the refrigerant channel enters through a second suction inlet, and refrigerant exiting at a second outlet flows to the second heat exchanger. Thereby advantage is taken of the energy contained in the refrigerant being recirculated, by applying it to actively propel refrigerant exiting the first expansion device towards the second heat exchanger, much as detailed above for embodiments of the invention including a first ejector.

In accordance with again a further preferred embodiment of the invention the home appliance dryer is embodied as a laundry dryer for drying items which are laundry, and wherein the drying chamber is a rotatable drum.

In accordance with again an additional preferred embodiment of the invention the operational state in dependence of which the second expansion device is operated is at least one of an ambient temperature of the home appliance dryer, a heating power of the first heat exchanger, and a cooling power of the second heat exchanger.

In accordance with still another preferred embodiment of the invention the amount of refrigerant recirculated from the outlet is between 20 % and 40 %, particularly between 25 % and 30 %, of the total refrigerant exiting at the outlet. With further preference an operational power of the blower is varied concurrently with the operation of the second expansion device. In accordance with the invention it has been observed that both the heating capacity of the first heat exchanger and the cooling capacity of the second heat exchanger may be increased by recirculating a part of the refrigerant from the compressor's outlet to its inlet, at the expense of increased power load on the compressor that has to propel a larger amount of the refrigerant due to the recirculation. With some residual dependence upon the working temperatures at the first heat exchanger and the second heat exchanger it has been observed that broad maxima of heating and cooling capacity occur at recirculation rates between 20 % and 40 %, the maxima amounting to increases around 30 % over the heating and cooling capacity absent any recirculation. Related increases in compressor input power amount from some 50 % to some 180 % in dependence upon the recirculation rate. In particular, by allowing an increase in operating temperature at the first heat exchanger and a concurrent decrease in operating temperature at the second heat exchanger, a maximum of heating capacity may be attained at a recirculation rate around 25 %, while the cooling capacity remains essentially equal to the cooling capacity without any recirculation. The maximum of the heating capacity is at around 10 % of the heating capacity without any recirculation. The compressor power is increased by around 90 %. This provides options for drying with decreased requirement of drying time at an expense of additional compressor input power. The improvement in drying time is preferredly set by increasing also the operational power of the blower that propels the air flow in the process air channel.

Further details, benefits and advantages of the invention will appear from the subsequent description of specific embodiments with references to the Figures in the attached drawing. In this drawing:
- Figure 1: shows a schematic section of a home appliance dryer according to the invention, embodied as a laundry dryer, and including a first embodiment of a heat pump circuit;
- Figure 2: shows a second embodiment of a heat pump circuit in a home appliance dryer according to the invention; and
- Figure 3: shows a third embodiment of a heat pump circuit in a home appliance dryer according to the invention.

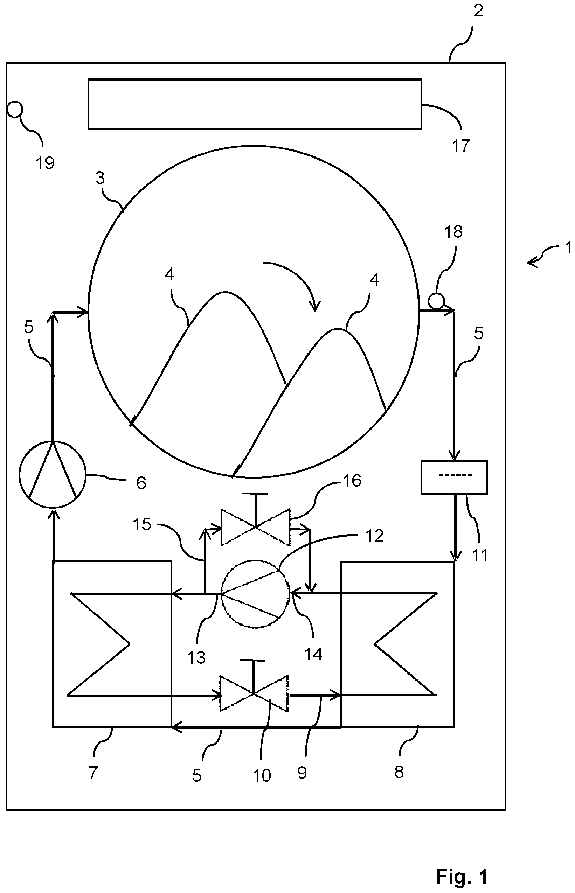

Fig. 1 shows a home appliance dryer 1, embodied as a laundry dryer 1, comprising a drying chamber 3 which is a rotatable drum 3 for receiving items 4 to be dried, which are humid pieces of laundry 4, and a process air circuit for passing an air flow of process air through the drying chamber 3, the process air circuit including an air channel 5, a blower 6 for driving the air flow, a first heat exchanger 7 for heating the air flow prior to entering the drying chamber 3, and a second heat exchanger 8 for cooling the air flow after leaving the drying chamber 3. Fig. 1 does not show means for bearing the drum 3 and for driving the drum 3 to rotate such as an electric motor and a transmission, which means are present in accordance with general knowledge in a practical realization of the home appliance dryer 1 as shown. The process air circuit also comprises a lint filter 11 for filtering lint which is composed of particles extracted from the items 4 by the process air flow. Lint occurs in a laundry dryer 1 in particular, in the form of small strips of textile fibres and other particular matter and released from the pieces of laundry 4 as they are tumbled in the air flow by the rotating drum 3 during drying.

The home appliance dryer 1 of Fig. 1 also comprises a heat pump circuit including a refrigerant channel 9 for circulating a refrigerant flow of a refrigerant, the first heat exchanger 7 as a heat source, the second heat exchanger 8 as a heat sink, a first expansion device 10 for expanding the refrigerant flow, and a compressor 12 for driving and compressing the refrigerant flow, the refrigerant flow circulating sequentially through the compressor 12, the first heat exchanger 7, the first expansion device 10, and the second heat exchanger 8.

In the heat pump circuit of Fig. 1 the refrigerant is circulated and thereby cyclically compressed and expanded as well as cooled and heated, on purpose of absorbing heat in the second heat exchanger 8 by evaporating the refrigerant at low pressure, and releasing heat in the first heat exchanger 7 by condensing the refrigerant at high pressure. Accordingly the first heat exchanger 7 is commonly designated as a condenser, and the second heat exchanger 8 is commonly designated as an evaporator. The refrigerant circulating in the heat pump circuit is propane, which is commonly known as R290 also.

Compressor 12 is operated for providing a predetermined high pressure at outlet 13, and second expansion device 16 is operated in dependence from an operational state of the home appliance dryer 1 as detailed above.

The heat pump circuit further includes a recirculator for recirculating a part of the refrigerant flow from an outlet 13 to an inlet 14 of compressor 12, the recirculator including a first recirculation channel 15 and a second expansion device 16 located in first recirculation channel 15. First recirculation channel 15 is advantageously designed to bridge compressor 12 from its outlet 13 to its inlet 14. The recirculator is a bypass wherein hot gas from outlet 13 of compressor 12 may partly be recirculated to inlet 14 of compressor 12 for varying an operational state of home appliance dryer 1, preferredly in adaptation to operational conditions imposed upon home appliance dryer 1. Such operational conditions may be a temperature of the ambient of home appliance dryer 1 or user-defined desires such as a need for particularly quick drying of items 4. In particular compressor 12 may be heated up faster by operating with increased bypassing of refrigerant at least during a start-up period of home appliance dryer 1, to ascertain smooth and safe operation without slugging even at low ambient temperatures.

Home appliance dryer 1 also comprises a control device 17 for controlling operation of the home appliance dryer 1 wherein the second expansion device 16 is a variable valve 16 operably connected to the control device 17. Control device 17 is also necessarily or optionally provided for controlling other components of home appliance dryer 1 such as expansion device 10, compressor 12, and various sensors to be described subsequently. Control device 17 also provides an interface to a user by including a display and various setting means for inputting commands and parameter settings by a user. Such display and setting means are not shown in Fig. 1 for the sake of simplicity.

The home appliance dryer 1 of Fig. 1 also comprises operational sensors 18, 19 for sensing an operational state of home appliance dryer 1 during operation, the operational sensors 18, 19 operably connected to the control device 17 for providing sensor signals relating to the operational state to the control device 17. Control device 17 is configured to operate the second expansion device 16 in dependence of the sensor signals, thereby controlling recirculation of refrigerant according to the operational parameters.

Operational sensors 18, 19 include a humidity sensor 18, whereby the operational state is defined to include a humidity of the items 4. This enables controlling the recirculation in dependence of humidity in the items 4.

Operational sensors 18, 19 also include a temperature sensor 19, whereby the operational state is defined to include an ambient temperature of home appliance dryer 1. This enables controlling the recirculation in dependence of the ambient temperature, and in particular enables application of recirculation of refrigerant in order to ascertain that no liquid refrigerant reaches the compressor, thereby avoiding slugging in the compressor. This is particularly important considering use of home appliance dryer 1 at relatively low ambient temperature in comparison to common room temperature which is conventionally set at around 20 °C. To these ends the recirculator is configured for increasing a temperature at inlet 14 for the event that home appliance dryer 1 is operated at an ambient temperature substantially less than a normal room temperature.

Temperature sensor 19 also represents the possibility of applying a plurality of temperature sensors 19 in appliance 1, including, for example, a sensor or some sensors placed in refrigerant channel 9 for monitoring certain operational temperatures. In particular another sensor may be placed at an outlet of first heat exchanger 7.

The recirculator in home appliance dryer 1 is also configured for increasing at least one of a heating power of the first heat exchanger 7 and a cooling power of the second heat exchanger 8 by recirculating a part of the refrigerant exiting compressor 12 at outlet 13. Accordingly the heating power and the cooling power are qualified as relevant operational states, besides the ambient temperature and others as specified elsewhere herein. Thereby additional energy applied for driving compressor 12 with its load increased by recirculating part of the refrigerant is applied to increase the power output by the heat pump circuit, which provides options for accelerating a drying process in home appliance dryer 1, even at the cost of increased power input to compressor 12. Accordingly an accelerated drying mode is offered for home appliance dryer 12 in addition to a normal mode of drying and designed without recirculating refrigerant, increasing flexibility of application of home appliance dryer 1.

The method the amount of refrigerant recirculated from outlet 13 is between 20 % and 40 %, particularly between 25 % and 30 %, of the total refrigerant exiting at the outlet 13. An operational power of blower 6 is varied concurrently with the operation of second expansion device 16. Both the heating capacity of first heat exchanger 7 and the cooling capacity of second heat exchanger 8 may be increased by recirculating a part of the refrigerant from outlet 13 to inlet 14, at the expense of increased power load on compressor 12 as it has to propel a larger amount of the refrigerant due to the recirculation. With some residual dependence upon the working temperatures at first heat exchanger 7 and second heat exchanger 8 broad maxima of heating and cooling capacity occur at recirculation rates between 20 % and 40 %, the maxima amounting to increases around 30 % over the heating and cooling capacity absent any recirculation. Related increases in input power for compressor 12 amount from some 50 % to some 180 % in dependence upon the recirculation rate. By allowing an increase in operating temperature at first heat exchanger 7 and a concurrent decrease in operating temperature at second heat exchanger 8, a maximum of heating capacity may be attained at a recirculation rate around 25 %, while the cooling capacity remains essentially equal to the cooling capacity without any recirculation. The maximum of the heating capacity is at around 10 % of the heating capacity without any recirculation. Input power for compressor 12 is increased by around 90 %. This provides options for drying with decreased requirement of drying time at an expense of additional input power for compressor 12. The improvement in drying time is preferredly set by increasing also the operational power of blower 6 that propels the air flow in process air channel 5.

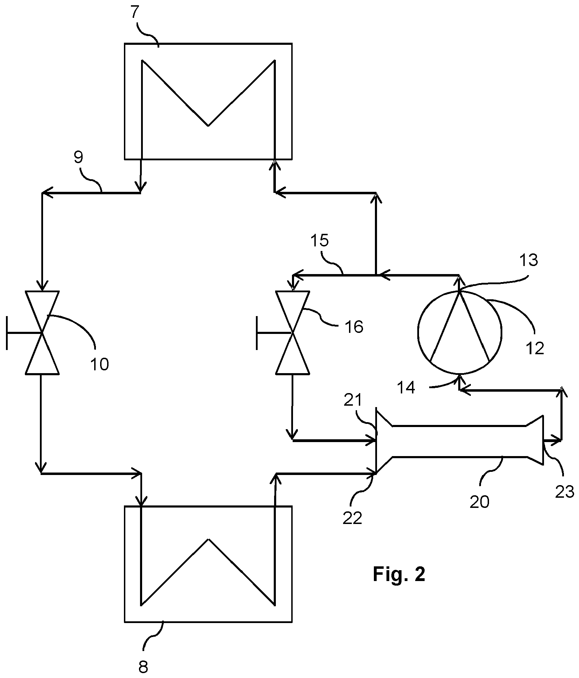

According to the embodiment of the heat pump circuit shown in Fig. 2 the recirculator is connected to inlet 14 through a first ejector 20, wherein refrigerant from the recirculator enters through a first driving inlet 21, refrigerant from refrigerant channel 6 enters through a first suction inlet 22, and refrigerant exiting at a first outlet 23 flows to compressor 12. In such embodiment use is made of energy contained in the refrigerant being recirculated, by applying it to actively propel refrigerant exiting the second heat exchanger towards the compressor. First ejector 20 includes the function of expanding refrigerant that is entered through driving inlet 21, converting pressure to velocity and forming a jet which entrains and propels refrigerant entering through suction inlet 22 to first outlet 23.

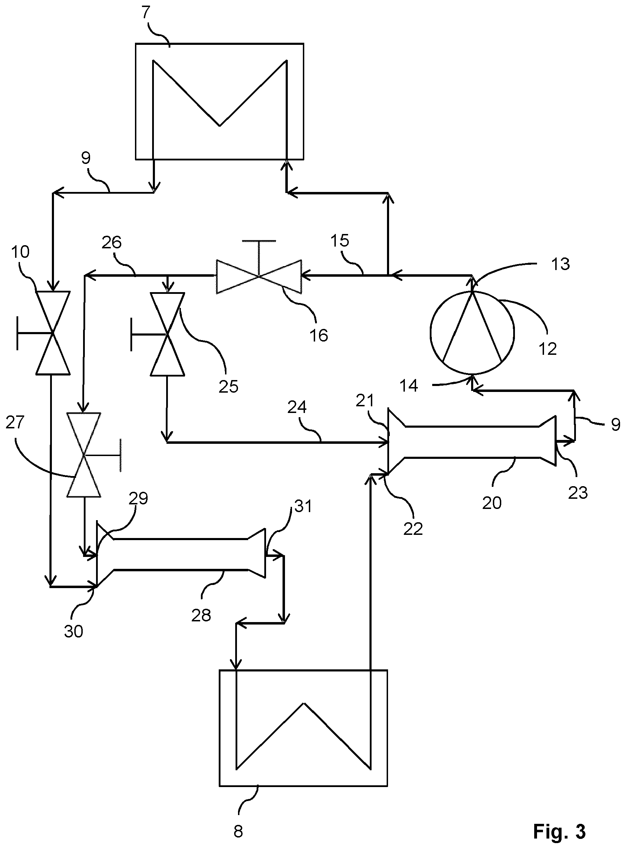

According to the embodiment of the heat pump circuit shown in Fig. 3 first recirculation channel 15 branches into a second recirculation channel 24 including a third expansion device 25 and a third recirculation channel 26 including a fourth expansion device 27 downstream of second expansion device 16. Second recirculation channel 24 connects to inlet 14 and third recirculation channel 26 connects to refrigerant channel 9 downstream of first expansion device 10 and upstream of second heat exchanger 8. Thereby the recirculated refrigerant is routed through second heat exchanger 8 partly or completely, applying its energy to assisting in evaporating the refrigerant in second heat exchanger 8, supporting the advantage of avoiding liquid refrigerant to occur at inlet 14..

Third recirculation channel 26 is connected to refrigerant channel 9 through a second ejector 28, wherein refrigerant from the third recirculation channel 26 enters through a second driving inlet 29, refrigerant from refrigerant channel 9 enters through a second suction inlet 30, and refrigerant exiting at a second outlet 31 flows to the second heat exchanger 8. Thereby advantage is taken of the energy contained in the refrigerant being recirculated, by applying it to actively propel refrigerant exiting first expansion device 10 towards second heat exchanger 8, much as detailed above for the embodiment of Fig. 2 and including first ejector 20.

Advantages of the invention include improvement of performance by regulating the working point of the heat pump circuit according to pertinent operational conditions or various operational parameters such as some temperature or pressure occurring in the heat pump circuit under operation. In addition regulating bypassing of refrigerant may enable faster drying of items to be dried by increasing both the heating capacity of the heat source and the cooling capacity of the heat sink in the heat pump circuit. Further a simple solution for varying the working point of a heat pump circuit in a home appliance dryer is provided which applies simple, cheap and quickly assembled means as an alternative to a compressor which is itself variable in operation, such as a variable-speed compressor.

### LIST OF REFERENCE NUMERALS

- 1: Home appliance dryer or laundry dryer
- 2: Housing
- 3: Treatment chamber or drum
- 4: Items to be dried or laundry
- 5: Air channel
- 6: Blower
- 7: First heat exchanger
- 8: Second heat exchanger
- 9: Refrigerant channel
- 10: First expansion device
- 11: Lint filter
- 12: Compressor
- 13: Outlet of compressor
- 14: Inlet of compressor
- 15: First recirculation channel
- 16: Second expansion device
- 17: Control device
- 18: Humidity sensor
- 19: Temperature sensor
- 20: First ejector
- 21: First driving inlet
- 22: First suction inlet
- 23: First outlet
- 24: Second recirculation channel
- 25: Third expansion device
- 26: Third recirculation channel
- 27: Fourth expansion device
- 28: Second ejector
- 29: Second driving inlet
- 30: Second suction inlet
- 31: Second outlet

## Claims

1. A home appliance dryer (1) comprising a drying chamber (3) for receiving items (4) to be dried and a process air circuit for passing an air flow of process air through the drying chamber (3), the process air circuit including an air channel (5), a blower (6) for driving the air flow, a first heat exchanger (7) for heating the air flow prior to entering the drying chamber (3), a second heat exchanger (8) for cooling the air flow after leaving the drying chamber (3), and comprising a heat pump circuit including a refrigerant channel (9) for circulating a refrigerant flow of a refrigerant, the first heat exchanger (7) as a heat source, the second heat exchanger (8) as a heat sink, a first expansion device (10) for expanding the refrigerant flow, and a compressor (12) for driving and compressing the refrigerant flow, the refrigerant flow circulating sequentially through the compressor (12), the first heat exchanger (7), the first expansion device (10), and the second heat exchanger (8), **characterized in that** the heat pump circuit includes a recirculator for recirculating a part of the refrigerant flow from an outlet (13) to an inlet (14) of the compressor (12), the recirculator including a first recirculation channel (15) and a second expansion device (16) located in the first recirculation channel (15).

2. The home appliance dryer (1) according to claim 1, comprising a control device (17) for controlling operation of the home appliance dryer (1) wherein the second expansion device (16) is a variable valve (16) operably connected to the control device (17).

3. The home appliance dryer (1) according to claim 2, comprising an operational sensor (18, 19) for sensing an operational state of the home appliance dryer (1) during operation, wherein the operational sensor (18, 19) is operably connected to the control device (17) for providing a sensor signal relating to the operational state to the control device (17), and the control device (17) is configured to operate the second expansion device (16) in dependence of the sensor signal.

4. The home appliance dryer (1) according to claim 3, wherein the operational sensor (18, 19) is a humidity sensor (18) and the operational state is a humidity of the items (4).

5. The home appliance dryer (1) according to one of the preceding claims, wherein the operational sensor (18, 19) is a temperature sensor (19), and the operational state is an ambient temperature of the home appliance dryer (1).

6. The home appliance dryer (1) according to one of the preceding claims, wherein the refrigerant is propane.

7. The home appliance dryer (1) according to one of the preceding claims, wherein the recirculator is connected to the inlet (14) through a first ejector (20), wherein refrigerant from the recirculator enters through a first driving inlet (21), refrigerant from the refrigerant channel (6) enters through a first suction inlet (22), and refrigerant exiting at a first outlet (23) flows to the compressor (12).

8. The home appliance dryer (1) according to one of the preceding claims, wherein the recirculator is configured for increasing a temperature at the inlet (14) for the event that the home appliance dryer (1) is operated at an ambient temperature substantially less than a normal room temperature.

9. The home appliance dryer (1) according to one of the claims 1 to 7, wherein the recirculator is configured for increasing at least one of a heating power of the first heat exchanger (7) and a cooling power of the second heat exchanger (8).

10. The home appliance dryer (1) according to one of the preceding claims, wherein the first recirculation channel (15) bridges the compressor (12) from its outlet (13) to its inlet (14).

11. The home appliance dryer according to one of the preceding claims, wherein the first recirculation channel (15) branches into a second recirculation channel (24) including a third expansion device (25) and a third recirculation channel (26) including a fourth expansion device (27) downstream of the second expansion device (16), the second recirculation channel (24) connecting to the inlet (14) and the third recirculation channel (26) connecting to the refrigerant channel (9) downstream of the first expansion device (10) and upstream of the second heat exchanger (8).

12. The home appliance dryer (1) according to claim 11, wherein the third recirculation channel (26) is connected to the refrigerant channel (9) through a second ejector (28), wherein refrigerant from the third recirculation channel (26) enters through a second driving inlet (29), refrigerant from the refrigerant channel (6) enters through a second suction inlet (30), and refrigerant exiting at a second outlet (31) flows to the second heat exchanger (8).

13. The home appliance dryer (1) according to one of the preceding claims, which is embodied as a laundry dryer (1) for drying items (4) which are laundry (4), and wherein the drying chamber (3) is a rotatable drum (3).

14. A method of operating a home appliance dryer (1) according to one of the preceding claims, wherein the compressor (12) is operated for providing a predetermined high pressure at the outlet (13), and wherein the second expansion device (16) is operated in dependence from an operational state of the home appliance dryer (1), to reduce the high pressure of the refrigerant to a predetermined low pressure.

15. The method according to claim 14, wherein the operational state is at least one of an ambient temperature of the home appliance dryer (1), a heating power of the first heat exchanger (7), and a cooling power of the second heat exchanger (8).

16. The method according to one of claims 14 and 15, wherein the amount of refrigerant recirculated from the outlet (13) is between 20 % and 40 %, particularly between 25 % and 30 %, of the total refrigerant exiting at the outlet (13).

17. The method according to one of claims 14 to 16, wherein an operational power of the blower (6) is varied concurrently with the operation of the second expansion device (16).
